# FASCICULE DE BREVET EUROPEEN

(11) **EP 0 731 907 B1**
(45) Date de publication et mention de la délivrance du brevet: **25.11.1998**
(21) Numéro de dépôt: 95933453.3
(22) Date de dépôt: 29.09.1995
(51) Int. Cl.: G01N 1/24

(54) **APPAREIL DE PRELEVEMENT ET D'ENREGISTREMENT DE PARTICULES SOLIDES OU GAZEUSES MUNI DE MOYENS DE CONDITIONNEMENT POUR RUBAN DE PRELEVEMENT DE CES PARTICULES**
VORRICHTUNG ZUR ENTNAHME UND REGISTRIERUNG VON FESTSTOFF- ODER GASPARTIKELN MIT MITTELN ZUR HERSTELLUNG EINES BANDES ZUR PROBENNAHME DER PARTIKEL
APPARATUS FOR SAMPLING AND REGISTERING OF SOLID AND GASEOUS PARTICLES PROVIDED WITH MEANS FOR PRODUCTION OF A RUBAN FOR SAMPLING THE PARTICULES

(30) Priorité: 30.09.1994 FR 9411869
(43) Date de publication de la demande: 18.09.1996
(73) Titulaire: Baufette, Laurent, 25000 Besancon (FR)
(72) Inventeur: Baufette, Laurent, 25000 Besancon (FR)
(74) Mandataire: Poupon, Michel
(86) Numéro de dépôt international: FR9501262
(87) Numéro de publication internationale: WO9610736

(56) Documents cités:
- FR-A- 2 646 507
- US-A- 3 654 801
- US-A- 3 728 081
- US-A- 4 214 480
- US-A- 5 320 734

## Description

La présente invention concerne un appareil de prélèvement et d'enregistrement de particules solides ou gazeuses muni de moyens de conditionnement pour ruban de prélèvement de ces particules.

Plus particulièrement, l'invention vise à perfectionner le dispositif, objet du brevet FR-2.646.507 dans les buts de réaliser:
- un appareil permettant à la fois le captage de particules et l'enregistrement de paramètres physiques divers (par exemple température, hygrométrie, etc...) en vue d'une exploitation plus représentative des résultats,
- un appareil compact d'emploi facile et autonome utilisé seul ou intégré dans une chaîne de mesures ou un ensemble à mesurer,
- un appareil permettant simultanément une surveillance en continu et temps réel du milieu étudié et un archivage des prélèvements et des paramètres en vue d'analyses ou études ultérieures, par exemple à des fins d'expertises,
- un conditionnement de la bande collectrice permettant un usage spécifique et unique de ladite bande et un remplacement facile par un autre conditionnement vierge après usage,
- un conditionnement étanche permettant une manipulation aisée et sans risque de contamination du ruban collecteur au cours des opérations de pré et de post-échantillonnage,
- un conditionnement, par destination, assimilé à un consommable.

Aucun des dispositifs connus à ce jour, qu'ils utilisent des filtres montés sur des ensembles à barillet ou des films montés sur bobines ne présentent toutes les propriétés recherchées et énumérées ci-dessus.

Le document US 5,320,734 formant l'état de la technique le plus proche, est un appareil pour tester la concentration d'une solution muni d'un conditionnement pour bande-test se présentant sous la forme d'une cassette. La bande-test vierge se déroule dans la cassette depuis un premier volume où elle est stockée jusque dans un deuxième volume dans lequel elle s'enroule après avoir traversé une partie centrale plate munie d'une ou deux fenêtres pour déposer la solution et mesurer sa concentration.

Cet appareil n'est cependant pas directement utilisable pour prélever des échantillons de particules solides ou gazeuses qui se fixeraient difficilement d'elles-mêmes sur la bande-test.

La présente invention atteint les buts fixés en proposant un appareil de prélèvement et d'enregistrement muni d'un conditionnement se présentant sous la forme générale d'une cassette, de préférence en matière synthétique antistatique, permettant le conditionnement rationnel d'une bande collectrice constituée d'un support spécifique à chaque application et munie d'une partie longitudinale, continue ou discontinue, permettant l'enregistrement, par impression ou mémorisation magnétique, des paramètres physiques (date, heure, température, hygrométrie, etc.. ) dans le même temps que le prélèvement des échantillons de particules.

D'autre part, l'invention concerne un appareil compact comportant les eléments techniques tels que source d'énergie, module de gestion et commande, élément moteur etc... et pouvant recevoir un conditionnement en forme de cassette.

Plus particulièrement, un mode de réalisation préféré de l'invention consiste en un appareil de prélèvement et d'enregistrement de particules solides ou gazeuses muni de moyens de conditionnement pour ruban de prélèvement de ces particules, dans lequel les moyens de conditionnement se présentent sous la forme d'une cassette (20) avec un premier volume (1) dans lequel est placé un ruban collecteur vierge (9), un second volume (7) pour l'enroulement du ruban (9) au fur et à mesure de son utilisation, lesdits volumes étant reliés par une partie centrale (2) dans laquelle circule le ruban, la partie centrale comprenant une première paroi dont la surface est sensiblement parallèle à une des grandes faces du ruban et une deuxième paroi sensiblement parallèle à la première paroi, **caractérisé en ce que**
- la première paroi de la partie centrale (2) est percée d'une pluralité de fenêtres, plusieurs de ces fenêtres étant en coïncidence avec des fenêtres identiques percées sur la deuxième paroi de la partie centrale (2), l'une des fenêtres étant destinée pour le prélèvement et
- l'appareil comporte une partie ouvrante permettant la mise en place du conditionnement de la cassette et comprend deux surfaces (25,26) comportant chacune les mêmes fenêtres que la partie centrale (2) de la cassette, fenêtres entourées chacune d'un joint d'étanchéité (12) et venant en coïncidence avec les fenêtres de la cassette lors de la mise en place de cette dernière, un conduit d'aspiration (23) avec un moyen d'aspiration (15) et une embouchure (24) placée derrière le ruban (9) en regard de la fenêtre servant au prélèvement.

Selon l'application choisie, l'appareil peut être équipé d'un ou de deux adaptateurs permettant d'intégrer l'appareil à une chaîne de mesure, un conduit gazeux, etc.

On comprendra mieux l'invention à l'aide de la description qui suit faite en référence aux figures suivantes:
- **la figure 1** représente en vue de face un dispositif de conditionnement de la bande selon l'invention,
- **la figure 2** est une coupe longitudinale selon AA de la figure 1,
- **la figure 3** est une vue de face d'un appareil de prélèvement-enregistrement selon l'invention, utilisant le dispositif des figures 1 et 2,
- **la figure 4** est une coupe selon CC de la figure 3,
- **la figure 5** est un schéma fonctionnel non limitatif de l'appareil des figures 3 et 4,
- **la figure 6** représente une variante de réalisation de l'appareil de prélèvement-enregistrement,
- **la figure 7** est un détail de l'appareil de la figure 4 pour un mode de fonctionnement particulier.

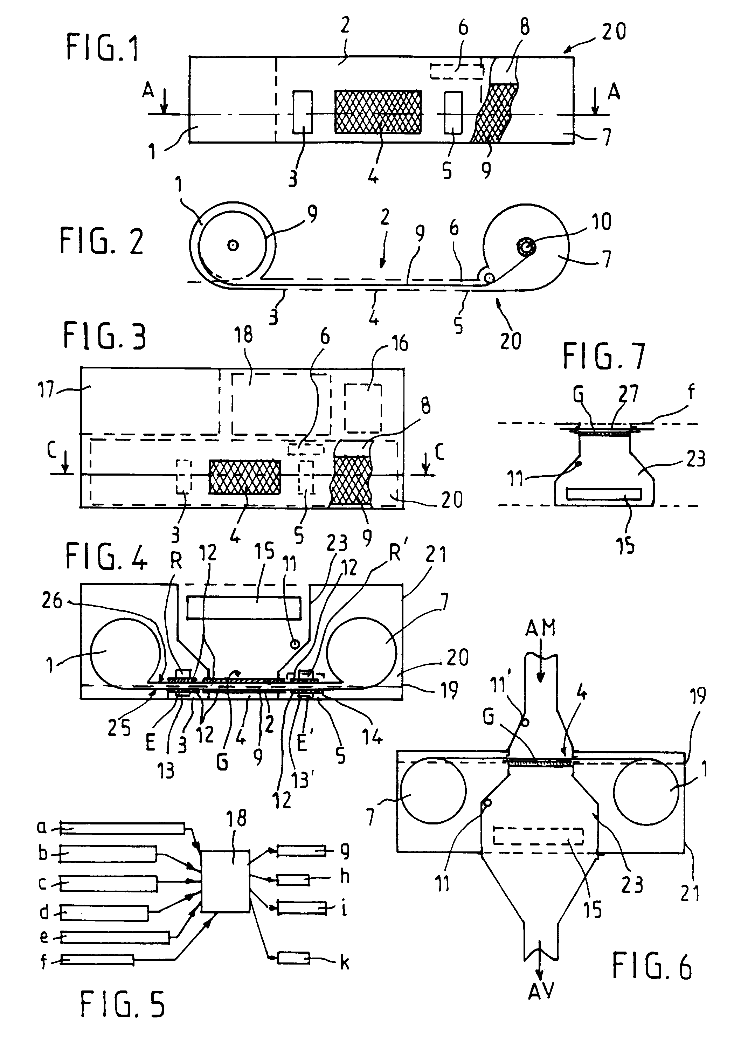

Le dispositif de conditionnement selon l'invention et représenté en figures 1 et 2, se présente avantageusement sous la forme d'une cassette (20), de préférence en matière synthétique antistatique, comprenant un volume de préférence cylindrique (1) dans lequel est logé un ruban collecteur vierge,
une partie (2) plate et de faible épaisseur comprenant, de part et d'autre de la partie (2) une fenêtre (3)
de mesure de la qualité d'origine du ruban, une fenêtre (4) de prélèvement, une fenêtre (5) de mesure quantitative et d'autres valeurs éventuelles des particules collectées ; sur l'arrière une fenêtre (6) d'impression des paramètres physiques coïncidant avec une partie du ruban (8) destinée à cet effet, enfin un volume de préférence cylindrique (7) muni d'un axe (10) relié à un moyen mécanique d'entraînement (16) permet l'enroulement du ruban (9) au cours de son utilisation.

Les fenêtres (3,4,5) sont traversantes soit dans les parois avant et arrière de la partie (2) tandis que la fenêtre (6) est ménagée dans une seule des parois de préférence arrière de la partie (2).

Ce dispositif ou conditionnement en cassette (20) est avantageux, car il permet toute utilisation et exploitation en temps réel, ainsi que le prélèvement aisé pour une analyse qualitative et quantitative plus élaborée en laboratoire, avec l'avantage de disposer des paramètres physiques simultanés (heures, dates etc. de l'enregistrement). Il est par ailleurs à noter que ce dispositif représente un intérêt économique en qualité de consommable.

La cassette (20) est principalement destinée à équiper les dispositifs de prélèvements de particules solides ou gazeuses, sèches ou humides, contenues dans une ambiance quelconque, elle est équipée d'un ruban ou film collecteur spécifique à chaque application.

Les figures 3 et 4 représentent une forme préférée non limitative de réalisation de l'appareil de prélèvement-enregistrement (21), dans lequel est utilisé le dispositif (20) des figures 1 et 2.

L'appareil (21) s'ouvre selon un plan d'ouverture (19) pour permettre l'introduction d'une cassette (20). La partie centrale (2) de ladite cassette est alors maintenue entre deux surfaces (25,26) présentant chacune les mêmes fenêtres (3,4,5,6) que la cassette, entourées de joints d'étanchéité (12).

En outre l'appareil (21) comporte un moyen d'aspiration (15) disposé dans un conduit ou chambre d'aspiration (23) dont l'embouchure (24) est placée derrière le ruban (9) en regard de la fenêtre de prélèvement (4), un moyen (11) de mesure de dépression prévu dans le conduit ou chambre d'aspiration (23), des moyens d'analyse (13,13') disposés en regard des fenêtres (3,5) et un moyen d'impression automatique disposé en regard de la fenêtre (6).

La partie du ruban échantillonneur passant derrière la fenêtre d'échantillonnage (et donc également devant la chambre de dépression) est maintenue à ce niveau par une grille support G pour éviter sa déformation au cours de l'échantillonnage, suite à la dépression créée dans le conduit ou chambre d'aspiration (23).

Selon ce mode de réalisation préféré représenté sur les figures 3 et 4, les moyens d'analyse (13,13') permettent d'analyser, par mesure différentielle, la quantité et/ou la qualité de particules collectées, tandis que le moyen (11) de mesure de la dépression permet le déplacement du ruban collecteur (9) selon un seuil de colmatage de référence ajustable, lequel moyen (11) est également utilisé pour déterminer et/ou ajuster la valeur quantitative de particules en fonction d'une nécessité éventuelle tenant compte de la qualité ou de la granulométrie des particules.

Les moyens (13,13') sont composés d'une source émissive (E,E') de rayonnement préférentiellement logée dans le couvercle (ou partie ouvrante) et d'un module récepteur (R,R') à l'intérieur du boîtier, le flux à l'émission traverse le ruban échantillonneur et est capté par l'élément récepteur.

Selon un mode de réalisation préféré non limitatif, les moyens (13,13') sont des sources lumineuses permettant de mesurer la différence d'opacité du ruban.

Le boîtier (21) comporte également une batterie ou source d'énergie (17) quelconque (piles, batteries, secteur), un module électronique de gestion et commande (18) de l'appareil, un moteur (16) pour l'entraînement de l'axe de rotation (10).

Selon une première variante de réalisation représentée en figure 6, l'appareil de prélèvement-enregistrement (21) comporte deux adaptateurs AM et AV, fixés respectivement sur la fenêtre de prélèvement (4) et sur la sortie du conduit d'aspiration (23), et permettant d'intégrer l'appareil (21) dans une installation par exemple dans une chaîne de mesures ou de le raccorder à une gaine de ventilation.

Selon une autre variante, l'appareil (21) peut être équipé d'un seul adaptateur. Par exemple si on veut utiliser l'appareil pour un prélèvement gazeux sur une gaine, on utilisera uniquement l'adaptateur AM.

Selon l'une ou l'autre des utilisations prévues, on peut prévoir un capteur de pression supplémentaire (11') situé dans l'adaptateur AM. La mesure différentielle de pression, en continu, entre les capteurs (11,11') durant l'échantillonnage permet de simplifier l'appareil en utilisant directement la mesure du colmatage du ruban échantillonneur sans avoir besoin d'un référentiel.

Selon la figure 7 et quelle que soit la configuration de l'appareil, le moyen d'aspiration (15) crée une dépression dans le conduit d'aspiration (23) mesurée par le capteur (11) et les poussières sont collectées sur le ruban sur une zone (27). Selon la granulomètrie et/ou la composition des poussières le ruban échantillonneur poreux se colmate dans la zone (27) et la dépression dans le conduit (23) augmente.

Cette nouvelle dépression correspond à un taux de colmatage du ruban, le seuil de colmatage ayant été préalablement défini (abaques, mesures expérimentales).

Si cette nouvelle dépression est atteinte en un temps inférieur à un temps de référence prélablement défini on constate que les poussières collectées ont une importante granulométrie et/ou qu'il y a une augmentation de la poussière dans le milieu étudié ; une alarme peut alors signaler le dépassement du seuil critique.

Si cette nouvelle dépression est obtenue dans un temps supérieur au temps de référence, il y a
fonctionnement normal avec avance de la bande, mesure de l'opacité, etc... comme décrit plus haut.

Si cette nouvelle dépression n'est pas atteinte au bout du temps de référence, il y a déplacement de la bande pour une nouvelle phase d'échantillonnage (mesure de l'opacité, etc.)

Selon le schéma fonctionnel non limitatif de la figure 5, le module (18) gère un, plusieurs ou la totalité des paramètres suivants dont la liste n'est pas limitative :
a) paramètres de fonctionnement,
b) entrée de seuils ou caractéristiques,
c) signal du capteur de pression (11),
d) opacité mesurée sur les fenêtres (3,5),
e) autres mesures physiques,
f) temporisation.
et commande les dispositifs suivants :
g) aspiration (15),
h) moteur (16),
i) impression (14),
j) alarme (non représentée),
k) transmission des données.

Bien entendu la cassette (20) et l'appareil (21) décrit ci-dessus ne sont pas limitatifs de l'invention, on peut prévoir des variantes de réalisation concernant par exemple :
- le nombre, les formes et dimensions, les emplacements et les fonctions des fenêtres selon des applications particulières,
- l'emplacement de la partie (8) du ruban destinée à l'impression qui pourrait se situer par exemple sur l'avant du ruban, cette partie (8) pouvant être continue ou discontinue,
- le mode d'enregistrement des paramètres physiques, en effet on peut remplacer le moyen d'impression (14) par exemple par un enregistrement magnétique.

Les avantages de l'invention sont nombreux et sont notamment les suivants :
- simplicité de mise en oeuvre et faible coût global d'exploitation pour ce type de surveillance et de prélèvement,
- polyvalence et autonomie pour tous types de surveillance et prélèvement d'échantillons, solides ou gazeux, en suspension ou sédimentables dans un environnement quelconque.
- fonctionnement de l'appareil selon des protocoles définis pour des applications :
   . mesure du ruban échantillonneur et/ou des composés particulaires prélevés en continu et temps réel (ou différé) pour la surveillance du milieu, et possibilité de transmission des données,
   . sauvegarde des échantillons, paramètres divers pour analyses en laboratoire et archivage/historique,
   . application sur site dans un environnement quelconque, à l'émission ou intégration dans une chaîne de mesures (ou à mesurer),
- garantie de la représentabivité des échantillons prélevés et non contamination de ceux ci lors des manipulations de pré et post-échantillonnage,
- corrélation des prélèvements avec divers autres paramètres physiques et/ou chimiques du milieu étudié ; à des fins de possibilité d'expertise,
- manipulation aisée du ruban collecteur et simplification de sa mise en oeuvre dans un appareil destiné aux prélèvements et à la surveillance des composés particulaires d'un milieu à étudier (la cassette est un consommable, lorsque la bande est totalement utilisée, il suffit de changer de cassette),
- cette idée de cassette peut très bien s'adapter pour être utilisée avec les moyens actuels d'échantillonnage, de surveillance, etc., de toutes substances physiques et/ou chimiques contenues dans un environnement à étudier.

## Revendications

1. Appareil de prélèvement et d'enregistrement de particules solides ou gazeuses muni de moyens de conditionnement pour ruban de prélèvement de ces particules, dans lequel les moyens de conditionnement se présentent sous la forme d'une cassette (20) avec un premier volume (1) dans lequel est placé un ruban collecteur vierge (9), un second volume (7) pour l'enroulement du ruban (9) au fur et à mesure de son utilisation, lesdits volumes étant reliés par une partie centrale (2) dans laquelle circule le ruban, la partie centrale comprenant une première paroi dont la surface est sensiblement parallèle à une des grandes faces du ruban et une deuxième paroi sensiblement parallèle à la première paroi, **caractérisé en ce que**
- la première paroi de la partie centrale (2) est percée d'une pluralité de fenêtres, plusieurs de ces fenêtres étant en coïncidence avec des fenêtres identiques percées sur la deuxième paroi de la partie centrale (2), l'une des fenêtres étant destinée pour le prélèvement et
- l'appareil comporte une partie ouvrante permettant la mise en place du conditionnement de la cassette et comprend deux surfaces (25,26) comportant chacune les mêmes fenêtres que la partie centrale (2) de la cassette, fenêtres entourées chacune d'un joint d'étanchéité (12) et venant en coïncidence avec les fenêtres de la cassette lors de la mise en place de cette dernière, un conduit d'aspiration (23) avec un moyen d'aspiration (15) et une embouchure (24) placée derrière le ruban (9) en regard de la fenêtre servant au prélèvement.

2. Appareil selon la revendication précédente, caractérisée en ce que la partie centrale (2) du conditionnement comporte une fenêtre (4) pour le prélèvement qui est la fenêtre centrale, une fenêtre (3) placée avant la fenêtre (4) dans le sens de défilement du ruban (9) de manière à permettre une mesure de la qualité d'origine du ruban, une fenêtre (5) placée après le fenêtre (4) dans le sens de défilement du ruban de manière à permettre notamment une mesure des échantillons prélevés.

3. Appareil selon l'une des revendications 1 à 2, caractérisée en ce que la partie centrale (2) du conditionnement comporte une fenêtre (6) coïncidant avec une partie d'enregistrement (8) du ruban.

4. Appareil selon l'une des revendications 1 à 3, caractérisée en ce qu' il comporte des moyens d'analyse différentielle (13,13') permettant une mesure des particules collectées.

5. Appareil selon la revendication 4, caractérisée en ce que les moyens (13,13') sont des sources de rayonnement permettant de mesurer la différence d'opacité du ruban.

6. Appareil selon l'une quelconque des revendications 1 à 5, caractérisée en ce qu'il comporte un moyen d'enregistrement choisi dans l'ensemble moyen d'impression-enregistrement magnétique.

7. Appareil selon l'une quelconque des revendications 1 à 6, caractérisée en ce qu'il comporte en outre une source d'énergie (17) du type piles ou batteries ou une source d'alimentation extérieure du type secteur, un module électronique de gestion et commande (18), un moteur (16) permettant le défilement de la bande collectrice.

8. Appareil selon l'une quelconque des revendications 1 à 7, caractérisée en ce qu'il comporte au moins un adaptateur (AV,AM).

9. Appareil selon les revendications 7 et 8, caractérisé en ce qu'il comporte en outre un capteur (11') situé sur l'adaptateur AM.

## Patentansprüche

1. Vorrichtung zur Entnahme und Aufzeichnung von festen oder gasförmigen Teilchen mit mit einem Band zur Entnahme der Teilchen ausgestatteten Bereitstellungsmitteln, bei der die Bereitstellungsmittel mit einer Kassette (20) mit einem ersten Raum (1), in dem ein unbenutztes Sammelband (9) angeordnet ist, und einem zweiten Raum (7) zur Aufwicklung des Bandes (9) entsprechend seiner Benutzung ausgebildet sind, wobei die Räume durch ein Zentralteil (2) miteinander verbunden sind, in dem das Band umläuft, und wobei das Zentralteil eine erste Wandung, deren Oberfläche verhältnismäßig genau parallel zu einer der Flachseiten des Bands ist, und eine verhältnismäßig genau parallel zu der ersten Wandung ausgerichtete zweite Wandung umfaßt, **dadurch gekennzeichnet,** daß
- die erste Wandung des Zentralteils (2) mit einer Vielzahl von Öffnungen durchbrochen ist, wobei mehrere dieser Öffnungen in Deckung mit identischen, in die zweite Wandung des Zentralteils (2) eingebrachten Öffnungen sind, wobei eine der Öffnungen für die Entnahme bestimmt ist, und
- die Vorrichtung einen öffenbaren Teil, der das Einrichten der Bereitstellung der Kassette gestattet und zwei Oberflächen (25, 26) umfaßt, von denen jede die gleichen Öffnungen wie das Zentralteil (2) der Kassette aufweist, wobei die Öffnungen jeweils von einem Dichtungsring (12) umgeben sind und mit den Öffnungen der Kassette bei der Anordnung derselben in Deckung kommen, und eine Saugleitung (23) mit einem Saugmittel (15) sowie einer hinter dem Band (9) gegenüber der zur Entnahme dienenden Öffnung angeordneten Mündung (24) aufweist.

2. Vorrichtung gemäß dem vorangehenden Anspruch, dadurch gekennzeichnet, daß das zur Bereitstellung dienende Zentralteil (2) eine Öffnung (4) zur Entnahme, die die Zentralöffnung ist, eine in Laufrichtung des Bandes (9) vor der Öffnung (4) angeordnete Öffnung (3), so daß eine Messung der ursprünglichen Qualität des Bandes möglich ist, und ein in Laufrichtung des Bandes hinter dem Fenster (4) angeordnetes Fenster (5), so daß insbesondere eine Messung der entnommenen Proben möglich ist, aufweist.

3. Vorrichtung gemäß Anspruch 1 oder 2, dadurch gekennzeichnet, daß das zur Bereitstellung dienende Zentralteil (2) eine Öffnung (6) aufweist, die mit einem zur Aufzeichnung dienenden Abschnitt (8) des Bandes in Deckung ist.

4. Vorrichtung gemäß einem der Ansprüche 1 bis 3, dadurch gekennzeichnet, daß sie Mittel (13, 13') zur differentiellen Analyse aufweist, die eine Messung der gesammelten Teilchen gestatten.

5. Vorrichtung gemäß Anspruch 4, dadurch gekennzeichnet, daß die Mittel (13, 13') Strahlungsquellen sind, die die Messung der Differenz der Opazität des Bandes gestatten.

6. Vorrichtung gemäß einem der Ansprüche 1 bis 5, dadurch gekennzeichnet, daß sie ein Aufzeichnungsmittel aufweist, das aus der Gesamtheit der Mittel zum Ausdruck und zur magnetischen Aufzeichnung ausgewählt ist.

7. Vorrichtung gemäß einem der Ansprüche 1 bis 6, dadurch gekennzeichnet, daß sie weiterhin eine Energiequelle (17) wie Zellen oder Batterien oder eine externe, netzabhängige Versorgungsquelle, ein Elektronikmodul (18) zur Koordination und Steuerung und einen Motor (16), der den Ablauf des Sammelbandes gestattet, umfaßt.

8. Vorrichtung gemäß einem der Ansprüche 1 bis 7, dadurch gekennzeichnet, daß sie wenigstens einen Adapter (AV, AM) umfaßt.

9. Vorrichtung gemäß Anspruch 7 und 8, dadurch gekennzeichnet, daß sie weiterhin einen über dem Adapter AM angeordneten Meßfühler (11') umfaßt.

## Claims

1. Apparatus for collecting and recording solid or gaseous particles, which apparatus is provided with packaging means for a tape collecting these particle, and in which apparatus the packaging means are in the form of a cassette (20) having a first chamber (1), in which a blank collector tape (9) is placed, a second chamber (7) for the take-up of the tape (9) as it is used, said chambers being connected by a central portion (2) in which the tape travels, the central portion comprising a first wall, the surface of which is substantially parallel to one of the main faces of the tape, and a second wall substantially parallel to the first wall, characterised in that
- the first wall of the central portion (2) is provided with a plurality of windows, several of these windows coinciding with identical windows provided in the second wall of the central portion (2), one of the windows being intended for the collection, and
- the apparatus comprises an opening portion permitting the positioning of the packaging of the cassette and comprises to surfaces (25, 26) each comprising the same windows as the central portion (2) of the cassette such windows being surrounded in each case, by a sealing joint (12) and coinciding with the windoiws of the cassette when the latter is placed in position, a suction line (23) with a suction means (15) and a mouthpiece (24) placed behind the tape (9) facing the window used for collecting.

2. Apparatus according to the preceding claim, characterised in that the central portion (2) of the packaging comprises a window (4) for the collection which is the central window, a window (3) placed in front of the window (4), when viewed with respect to the direction of movement of the tape (9), so as to permit a measurement of the original quality of the tape, and a window (5) placed after the window (4), when viewed with respect to the direction of movement of the tape, so as to permit more especially a measurement of the samples collected.

3. Apparatus according to one of claims 1 to 2, characterised in that the central portion (2) of the packaging comprises a window (6) coinciding with a recording portion (8) of the tape.

4. Apparatus according to one of claims 1 to 3, characterised in that it comprises means for differential analysis (13, 13c), which permit a measurement of the particles collected.

5. Apparatus according to claim 4, characterised in that the means (13, 13c) are radiation sources, which permit the difference in opacity of the tape to he measured.

6. Apparatus according to any one of claims 1 to 5, characterised in that it comprises a recording means selected from all the means for magnetic printing and recording.

7. Apparatus according to any one of claims 1 to 6, characterised in that it also comprises a power source (17) of the cell or battery type or an external power source of the mains type, an electronic management and control module (18) and a motor (16) which permits the movement of the collector tape.

8. Apparatus according to any one of claims 1 to 7, characterised in that it comprises at least one adapter (AV, AM).

9. Apparatus according to claims 7 and 8, characterised in that it also comprises a sensor (11c) situated on the adapter AM.
